# EUROPÄISCHE PATENTSCHRIFT

(11) **EP 3 237 262 B1**
(45) Veröffentlichungstag und Bekanntmachung des Hinweises auf die Patenterteilung: **10.07.2019**
(21) Anmeldenummer: 15810662.5
(22) Anmeldetag: 17.12.2015
(51) Int. Cl.: B61H 5/00, F16D 65/092

(54) **BREMSBELAGHALTERUNG, BREMSBELAG UND BELAGHALTER**
BRAKE PAD HOLDER, BRAKE PAD AND HOLDER
SUPPORT DE GARNITURE DE FREIN À DISQUE, GARNITURE DE FREIN À DISQUE ET SUPPORT

(30) Priorität: 23.12.2014 DE 102014119492
(43) Veröffentlichungstag der Anmeldung: 01.11.2017
(73) Patentinhaber: KNORR-BREMSE Systeme für Schienenfahrzeuge GmbH, 80809 München (DE)
(72) Erfinder: ELSTORPFF, Marc-Gregory, 80638 München (DE); MATHIEU, Michael, 82178 Puchheim (DE); LANGWADT, Marco, 80992 München (DE); JUNG, Alexander, 82131 Gauting (DE); FUDERER, Erich, 82256 Fürstenfeldbruck (DE)
(86) Internationale Anmeldenummer: PCT/EP2015/080124
(87) Internationale Veröffentlichungsnummer: WO 2016/102286

(56) Entgegenhaltungen:
- EP-A1- 0 498 423
- EP-A1- 0 837 260
- EP-A1- 2 816 250
- WO-A1-2007/012458
- DE-A1-102007 020 572
- GB-A- 945 343

## Beschreibung

Die vorliegende Erfindung betrifft eine Bremsbelaghalterung eines Bremsbelags einer Scheibenbremse eines Schienenfahrzeuges an einem Belaghalter der Scheibenbremse gemäß dem Oberbegriff des Anspruchs 1 sowie einen Bremsbelag und einen Belaghalter.

Eine gattungsgemäße Bremsbelaghalterung eines Bremsbelags einer Scheibenbremse eines Schienenfahrzeuges ist beispielsweise aus der EP 0 837 260 A1 bekannt. Dabei weist eine Belagträgerplatte des Bremsbelags einen Umgriff auf, der die Ränder des Belaghalters beidseitig umgreift.

In den Belaghalter ist des Weiteren ein Verriegelungsbolzen auf einer dem Bremsbelag abgewandten Seite vorgesehen, der durch eine Bohrung in der Belaghalterplatte in eine Bohrung der Belagträgerplatte des Bremsbelags eingreift und so den Bremsbelag in alle Richtungen formschlüssig hält.

Zur Montage des Bremsbelags muss die Belagträgerplatte in Umfangsrichtung einer Bremsscheibe der Scheibenbremse über die Belaghalterplatte des Belaghalters geführt werden.

Um einen solchen Umgriff an einer Belagträgerplatte anformen zu können, ist die Belagträgerplatte des Bremsbelags, wie auch der Belaghalter selbst, als Gussteil ausgeführt.

Nachteilig ist, dass es bei derartigen großflächig bearbeiteten Gussteile wie die Belagträgerplatte nicht selten zu einem Verzug eines solchen Gussteils kommt, was die Fertigung der Belagträgerplatte erschwert und einen damit einhergehenden Ausschuss an Belagträgerplatten zur Folge hat.

Da beide Seiten der Belagträgerplatte über die gesamte Fläche bearbeitet werden müssen, ist der Bearbeitungsaufwand bei diesen als Gussteile hergestellten Belagträgerplatten relativ groß.

Aus der GB 945 343 A ist eine Bremsbelaghalterung bekannt, bei der zur Fixierung des Bremsbelags an dem Belaghalter der Bremsbelaghalterung in Umfangsrichtung einander gegenüberliegende Enden der Bremsbeläge mit halbkreisförmigen Einschnitten ausgebildet sind, die zwischen zwei in entsprechendem Abstand voneinander angeordnete Bolzen mit einem über die Endstücke des Bremsbelags ragenden Kopf eingeschoben werden.

Aufgabe der vorliegenden Erfindung ist es, eine Bremsbelaghalterung eines Bremsbelages einer Scheibenbremse eines Schienenfahrzeuges an einen Belaghalter der Scheibenbremse so zu gestalten, dass der Bremsbelag sicher und formschlüssig an dem Belaghalter gehalten wird, wobei eine Übertragung sämtlicher auftretender Kräfte ermöglicht sein muss und ein Bremsbelagwechsel unter Berücksichtigung des zur Verfügung stehenden Bauraums in einfacher und problemloser Weise ermöglicht ist.

Diese Aufgabe wird durch eine Bremsbelaghalterung mit den Merkmalen des Anspruchs 1, einen Bremsbelag mit den Merkmalen des Anspruchs 12 und durch einen Belaghalter mit den Merkmalen des Anspruchs 19 gelöst.

Bei der erfindungsgemäßen Bremsbelaghalterung, bei der ein Belaghalter eine Halterplatte und wenigstens ein Verriegelungselement zur Festlegung des Belagträgers an der Halterplatte und der Bremsbelag eine Belagträgerplatte und wenigstens ein an dieser angeordnetes Belagelement aufweist und die Belagträgerplatte in montierter Lage des Bremsbelags an dem Belaghalter formschlüssig an dem Belaghalter gehalten ist, sind an der Halterplatte randseitige, sich in Richtung der Belagträgerplatte erstreckende umfängliche Randbereiche der Belagträgerplatte umgreifende Umgriffstege mit zur Flächenmitte der Halterplatte offenen Nuten angeformt.

Dies ermöglicht eine wesentlich einfachere Bearbeitung der Trägerplatte, da nur noch Bohrungen, Ansenkungen sowie eine Bearbeitung der Randbereiche der Belagträgerplatte erforderlich sind, jedoch keine großflächige Bearbeitung der Belagträgerplatte.

Der erfindungsgemäße Bremsbelag einer Scheibenbremse eines Schienenfahrzeuges zeichnet sich dadurch aus, dass umfängliche Randbereiche der Belagträgerplatte mit reduzierter Plattendicke zur Aufnahme in Nuten von die umfänglichen Randbereiche der Belagträgerplatte umgreifenden Umgriffstegen einer Halterplatte eines Belaghalters der Scheibenbremse ausgebildet sind.

Der Belaghalter einer Scheibenbremse eines Schienenfahrzeuges zeichnet sich dadurch aus, dass an der Halterplatte randseitig sich in Richtung der Belagträgerplatte erstreckende Umgriffstege mit zur Flächenmitte der Halterplatte offenen Nuten angeformt sind, in denen umfängliche Randbereiche der Belagträgerplatte diese umgreifend mit reduzierter Plattendicke aufnehmbar sind.

Die derart ausgebildete Belagträgerplatte des Bremsbelags ist dadurch beispielsweise auf einer Magnetspannplatte einspannbar, wodurch eine geringe Bearbeitungszeit und eine geringe Ausschussquote erreichbar ist.

Vorteilhafte Ausführungsvarianten der Erfindung sind Gegenstand der Unteransprüche.

Nach einer bevorzugten Ausführungsvariante der Erfindung sind Randbereiche der Belagträgerplatte mit reduzierter Plattendicke ausgebildet. Die Randbereiche der Belagträgerplatte mit reduzierter Plattendicke sind dabei bevorzugt in den Nuten der Umgriffstege der Halterplatte aufgenommen.

Dadurch können die Umgriffstege der Halterplatte kürzer ausgebildet werden als bei der aus dem Stand der Technik bekannten Bauweise, bei der die Umgriffstege an der Belagträgerplatte angeformt sind und die Halterplatte umgreifen müssen. Dieser dadurch zusätzlich zur Verfügung stehende Bauraum steht beispielsweise einer Vergrößerung der Reibbelagdicke zur Verfügung.

Nach einer bevorzugten Ausführungsvariante der Erfindung stehen die Umgriffstege der Halterplatte des Belaghalters nicht über die dem wenigstens einen Belagelement zugewandte Fläche der Belagträgerplatte vor.

Dadurch ist ermöglicht, dass die über den Rand der Belagträgerplatte vorstehende Belagelemente des Bremsbelags in ihrer Beweglichkeit nicht eingeschränkt werden.

Die Randbereiche der Belagträgerplatte mit reduzierter Plattendicke sind gemäß einer weiteren vorteilhaften Ausführungsvariante als Ausfräsung ausgebildet.

Die Belagträgerplatte ist dabei vorzugsweise als Blechteil aus einem gewalzten Blech ausgeschnitten gefertigt, was sowohl hinsichtlich der Materialwahl als auch der einfachen Bearbeitung einer derart ausgebildeten Belagträgerplatte mit einer Kostensenkung gegenüber den sonst als Gussteil ausgeführten Trägerplatten einhergeht.

Die Randbereiche der Belagträgerplatte sind dabei vorzugsweise stufenförmig oder auch abgeschrägt ausgebildet. In entsprechender Weise sind die Nuten der Halterplatte als Rechtecknuten oder derart ausgebildet, dass wenigstens eine der Innenflächen der Nuten abgeschrägt ausgebildet ist.

Solche Formgestaltungen der Umgriffstege und der Randbereiche der Belagträgerplatte sind in einfacher Weise als Gussteil (Halterplatte) bzw. an einer aus gewalztem Blech gefertigten Belagträgerplatte einbringbar.

Nachfolgend werden bevorzugte Ausführungsvarianten der Erfindung anhand der beiliegenden Zeichnungen näher erläutert. Es zeigen:
- Fig. 1: eine perspektivische Ansicht einer bevorzugten Ausführungsvariante einer erfindungsgemäßen Bremsbelaghalterung,
- Fig. 2: eine Seitenansicht auf die Bremsbelaghalterung aus Fig. 1 in radialer Blickrichtung,
- Fig. 3: eine Seitenansicht auf die Bremsbelaghalterung aus Fig. 1 in Umfangsrichtung mit abgeschrägter Nut,
- Fig. 4: eine Seitenansicht auf die Bremsbelaghalterung aus Fig. 1 in umfänglicher Richtung mit einer rechteckig ausgebildeten Nut
- Fig. 5: eine perspektivische Ansicht einer Belagträgerplatte des Bremsbelags mit Randbereichen mit reduzierter Plattendicke,
- Fig. 6: eine perspektivische Ansicht einer Ausführungsvariante eines Belaghalters mit randseitigen sich in Richtung der Belagträgerplatte erstreckenden Umgriffstegen,
- Fig. 7: eine Ansicht von unten auf die Bremsbelaghalterung aus Fig. 1 mit Darstellung der Belagelemente,
- Fig. 8: eine perspektivische Ansicht einer alternativen Ausführungsvariante eines Bremsbelags mit einem einzigen Belagelement und
- Fig. 9: eine Schnittansicht des in Figur 8 gezeigten Bremsbelags.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbelaghalterung, Belaghalter, Halterplatte, Bremsbelag, Belagträgerplatte, Belagelemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

Unter der Richtung "radial" ist hier stets eine Richtung der Bremsbelaghalterung, Belaghalter, Halterplatte, Bremsbelag, Belagträgerplatte, Belagelemente und dergleichen im in einer Scheibenbremse eingebauten Zustand radial zu einer Drehachse einer (nicht dargestellten) Bremsscheibe der Scheibenbremse zu verstehen.

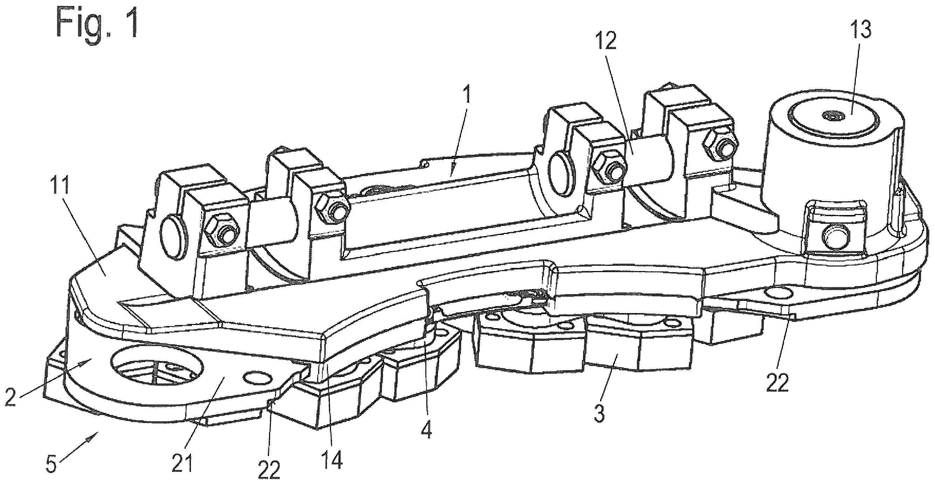

In Fig. 1 ist eine Ausführungsvariante einer erfindungsgemäßen Bremsbelaghalterung in einer perspektivische Darstellung gezeigt.

Dabei weist ein Belaghalter 1 eine Halterplatte 11 und wenigstens ein Verriegelungselement 13 zur Festlegung eines Belagträgers 2 eines Bremsbelags 5 an der Halterplatte 11 auf.

Des Weiteren sind auf der Oberseite des Belaghalters 1 zwei Belaghalterbolzen 12 gezeigt, über die der Belaghalter 1 an einer Zuspanneinrichtung der Scheibenbremse festgelegt ist.

Das Verriegelungselement 13 ist dabei bevorzugt als Verriegelungsbolzen ausgebildet, der in einer zylindrischen Fassung des Belaghalters 1 aufgenommen und durch eine Bohrung 16 in der Belaghalterplatte 11 und einer Bohrung 24 in der Belagträgerplatte 2 des Bremsbelags 5 gelagert ist und so die Belagträgerplatte 2 formschlüssig gegen eine Verschiebung in oder gegen die Drehrichtung einer (nicht dargestellten) Bremsscheibe der Scheibenbremse sichert.

Auf einer dem Belaghalterbolzen 12 abgewandten Seite der Halterplatte 11 des Belaghalters 1 ist ein Bremsbelag 5 gehaltert.

Der Bremsbelag 5 weist dabei eine Belagträgerplatte 2 und wenigstens ein an dieser angeordnetes, insbesondere gelagertes Belagelement 3 auf, das an seiner der Belagträgerplatte 2 abgewandten Seite den eigentlichen Reibbelag 31 aufweist, der an einem Trägerelement 32 des Belagelements 3 befestigt ist.

Nach einer bevorzugten Ausführungsvariante ist an der Belagträgerplatte 2 eine Vielzahl von Belagelementen 3 angeordnet.

So sind in der in den Figuren 1 bis 4 und 7 gezeigten Ausführungsvariante an der Belagträgerplatte 2 mehrere aus jeweils einem Trägerblech 4 und mehreren an diesen angeordneten, insbesondere gelagerten Belagelementen 3 gebildete Gruppenelemente angeordnet.

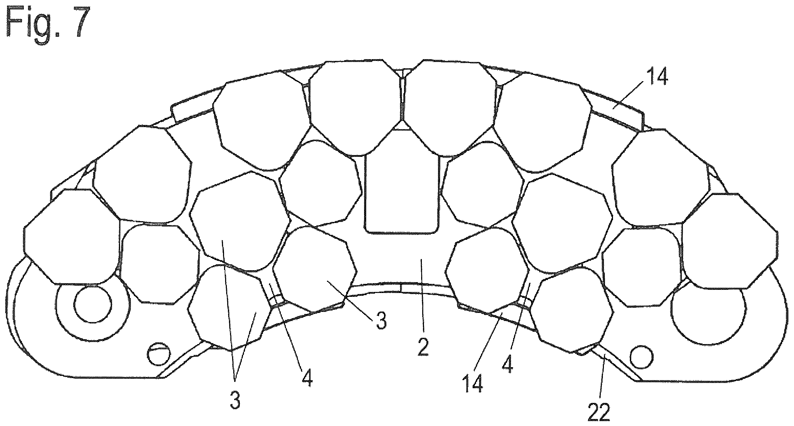

Jedes dieser Gruppenelemente weist dabei besonders bevorzugt jeweils drei Belagelemente 3 auf. Wie in Fig. 7 gezeigt, sind dabei an jedem der Trägerbleche 4 drei Belagelemente 3 gelagert. Dabei weisen jeweils zwei der Belagelemente 3 eine gleich große Reibfläche auf, so dass bei einer Verteilung einer Zuspannkraft auf die einzelnen Belagelemente 3 eines Trägerbleches 4 bei gleich verteilter Zuspannkraft unterschiedlich große Flächenpressungen entstehen, wobei radial innen liegende Belagelemente 3 kleinere Reibflächen aufweisen als die Reibflächen von radial zur Drehachse der Bremsscheibe äußeren Belagelementen 3, um die Verschleißgeschwindigkeit der einzelnen Belagelemente 3 möglichst gleich zu halten.

Die Belagelemente 3 weisen bevorzugt an den Trägerelementen 32 angeordnete, insbesondere angeformte Lagerelemente 33 zur sphärischen Lagerung, insbesondere als Kugelkalotten ausgebildet, auf, die in bevorzugt als Kugelpfannen ausgebildeten sphärischen Ausnehmungen an den Trägerblechen 4 gelagert sind.

Die Trägerbleche 4 sind bevorzugt entsprechend in sphärischen Ausnehmungen 25 an der Belagträgerplatte 2 gelagert.

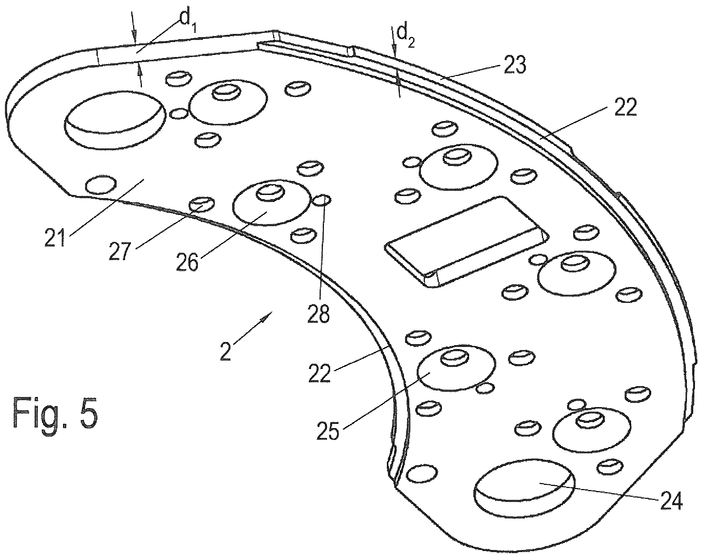

Dazu sind, wie in Fig. 5 zu erkennen ist, sphärisch geformte Ausnehmungen 25 im zentralen Bereich 21 der Belagträgerplatte 2 vorgesehen sowie Bohrungen 27 zur Aufnahme von Lagerelementen 33 der einzelnen Belagelemente 3.

Neben der Lagerung der Belagelemente 3 an den Trägerblechen 4 bzw. der Lagerung der Trägerbleche 4 an der Belagträgerplatte 2 ist es prinzipiell auch denkbar, die Belagelemente 3 an den Trägerblechen 4 bzw. die Trägerbleche 4 an der Belagträgerplatte 2 anzuordnen, beispielsweise fest anzubringen.

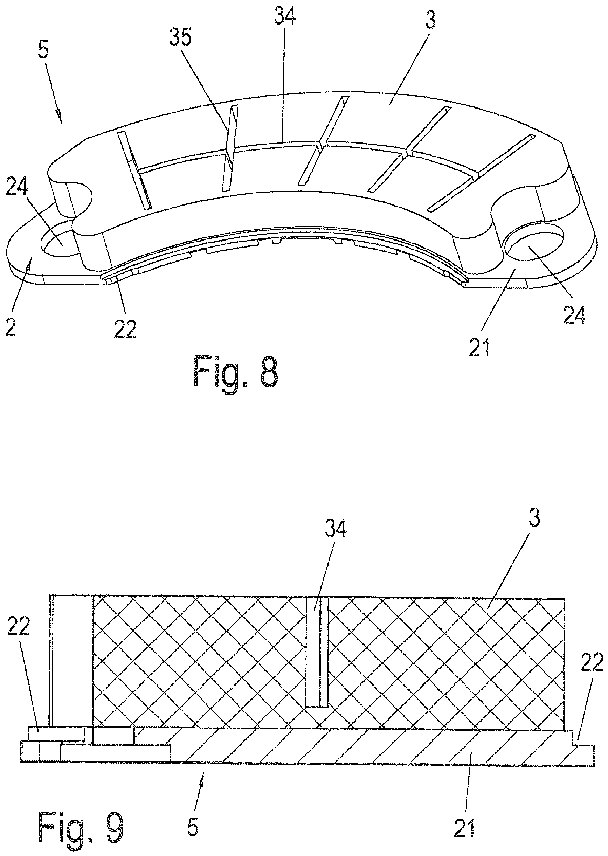

Nach einer alternativen Ausführungsvariante, gezeigt in den Figuren 8 und 9, ist an der Belagträgerplatte 2 ein einziges Belagelement 3 angeordnet. Die Reibfläche dieses Belagelements 3 ist entsprechend deutlich größer als die Belagelemente 3 der in den Figuren 1 bis 4 und 7 gezeigten Belagelemente 3. Das Belagelement 3 ist dabei direkt an der Belagträgerplatte 2 festgelegt. Ein Trägerblech 4, wie es bei der Ausführungsvariante entsprechend der Figuren 1 bis 7 gezeigt ist, ist bei dieser Ausführungsvariante nicht vorgesehen.

Das Belagelement 3 weist vorzugsweise schlitzförmige Ausnehmungen 34, 35 auf, die zu der der Belagträgerplatte 2 abgewandten Seite hin offen sind. Besonders bevorzugt erstreckt sich ein erster Schlitz 34 entlang einer Kreislinie, wobei der Mittelpunkt eines Kreises dieser Kreislinie dem Drehpunkt der Bremsscheibe der Scheibenbremse entspricht. Der erste Schlitz 34 wird bevorzugt von mehreren den ersten Schlitz 34 senkrecht kreuzenden zweiten Schlitzen 35 geschnitten, die im Bereich der Kreuzungspunkte bevorzugt in gleichen Abständen zueinander stehen. Die Schlitztiefe der Schlitze 34, 35 beträgt dabei bevorzugt zwischen 75% und 90% der anfänglichen Reibbelagdicke des Belagelements 3.

Die Halterung der Belagträgerplatte 2 an der Halterplatte 11 des Belaghalters 1 erfolgt des Weiteren über randseitige sich in Richtung der Belagträgerplatte 2 erstreckende Umgriffstege 14 mit zur Flächenmitte der Halterplatte 11 offenen Nuten 15, wie es in den Fig. 1, 3 und 4 gut zu erkennen ist.

Dabei sind Randbereiche 23 der Belagträgerplatte 2 mit reduzierter Plattendicke d₂ ausgebildet. Besonders bevorzugt liegt die Dicke d₂ der Randbereiche 23 der Belagträgerplatte 2 bei etwa 40% bis 60% der Dicke d₁ des zentralen Bereichs 21 der Belagträgerplatte 2.

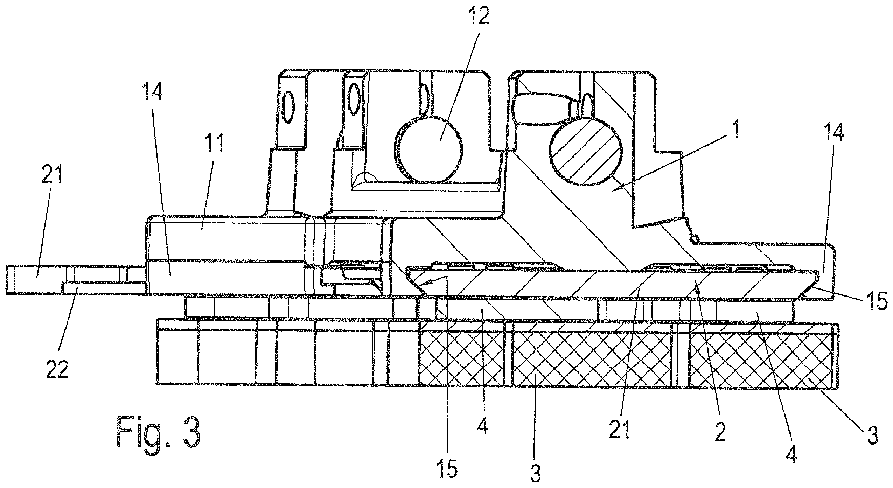

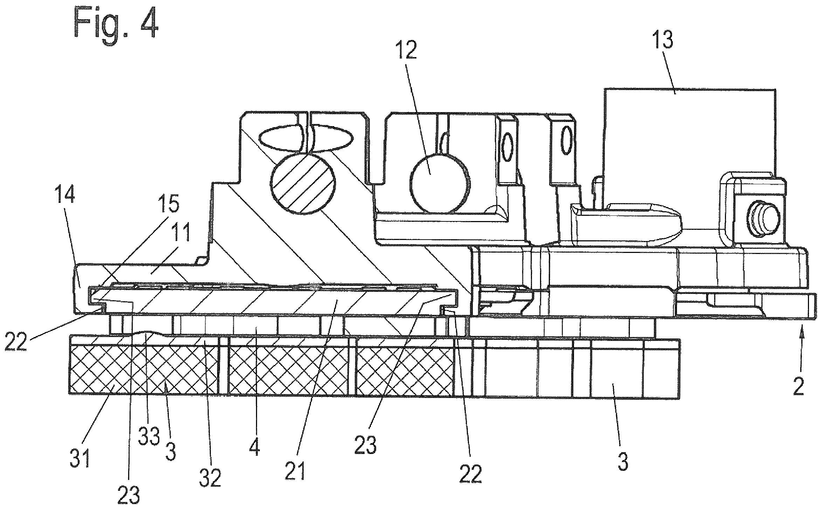

Wie besonders gut in den Fig. 3 und 4 zu erkennen ist, sind die Randbereiche 23 der Belagträgerplatte 2 mit reduzierter Plattendicke d₂ in den Nuten 15 der Umgriffstege 14 der Halterplatte 11 aufgenommen.

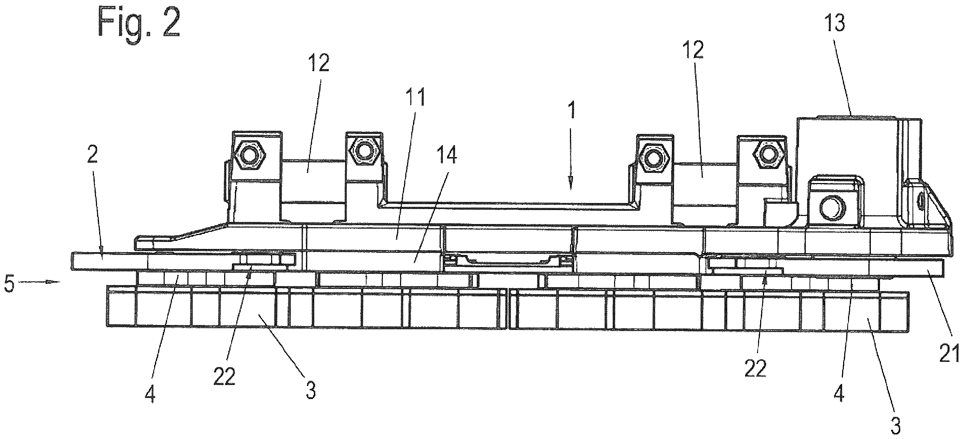

Die Umgriffstege 14 sind bevorzugt derart geformt, dass sie nicht über die dem wenigstens einen Belagelement 3 zugewandte Fläche der Belagträgerplatte 2 vorstehen, sondern mit dieser bündig abschließen, wie es beispielsweise in Fig. 2 gezeigt ist.

Demgemäß entspricht die Dicke d₁ des zentralen, nicht ausgefrästen Bereichs 21 der Belagträgerplatte 2 bevorzugt der Erstreckung der Umgriffstege 14 von der Belaghalterplatte 11 in Richtung der Belagträgerplatte 2.

Diese Randbereiche 23 der Belagträgerplatte 2 mit reduzierter Plattendicke d₂ sind dabei bevorzugt durch Vornahme einer Ausfräsung aus dem Material der Belagträgerplatte 2 eingebracht.

Die Belagträgerplatte 2 ist dabei bevorzugt als Blechteil, insbesondere als aus einem gewalzten Blech ausgeschnittenes Blechteil ausgebildet.

Die Umgriffstege 14 sind dabei an sich in Umfangsrichtung der Bremsscheibe der Scheibenbremse erstreckenden Seitenrändern der Halterplatte 11 ausgebildet.

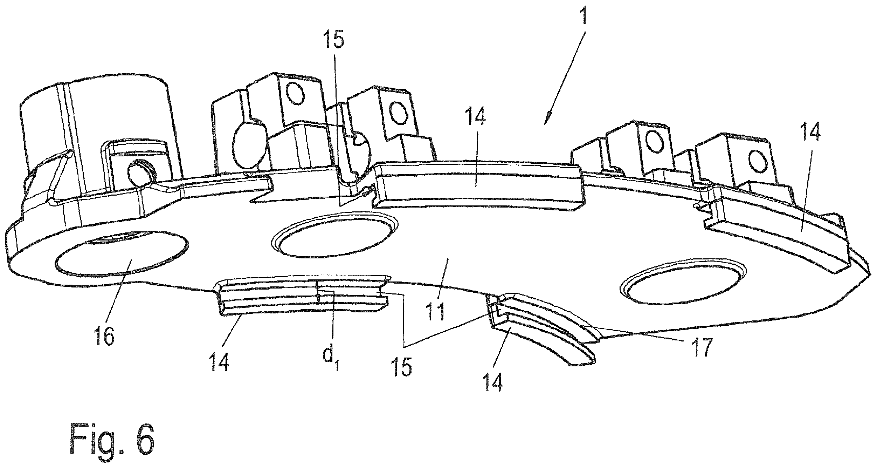

Dabei sind, wie besonders gut in Fig. 6 zu erkennen ist, an jedem der sich in Umfangsrichtung der Bremsscheibe der Scheibenbremse erstreckenden Seitenrändern der Halterplatte 11 zwei solcher Umgriffstege 14 ausgebildet.

Denkbar ist aber auch die Anformung nur eines Umgriffstegs 14 pro Seitenrand oder auch mehr als zwei Umgriffstege 14 pro Seitenrand.

Um eine unmittelbare Anlage der der Halterplatte 11 zugewandten Seite der Belagträgerplatte 2 an der Halterplatte 11 zu verhindern, sind die der Oberfläche der Halterplatte 11 nahen Auflagerflächen der Umgriffstege 14 als Erhöhung 17 ausgebildet.

Die Formgestalt der Nuten 14 in den Umgriffstegen 14 sind gemäß einer in Fig. 3 gezeigten vorteilhaften Ausführungsvariante dergestalt, dass wenigstens eine der Innenflächen der Nuten abgeschrägt ausgebildet ist.

Entsprechend ist die an der abgeschrägten Innenfläche der Nuten 15 anliegende Anlagefläche der Randbereiche 23 der Belagträgerplatte 2 abgeschrägt ausgebildet, so dass die beiden einander zugewandten Gleitflächen in den Nuten 15 und an den Randbereichen 23 der Belagträgerplatte 2 aneinander liegen.

Bei der in Fig. 4 gezeigten alternativen Ausführungsvariante sind die Nuten 15 als Rechtecknuten und die Randbereiche 23 der Belagträgerplatte 2 stufenförmig ausgebildet, wobei die Belagträgerplatte 2 mit einer Dicke d₁ sich über eine Stufe 22 zum Randbereich 23 hin verjüngt.

Die Dicke d₂ des Randbereichs 23 ist dabei geringfügig kleiner als die Nutenbreite d₃ der Umgriffstege 14, so dass bei der Montage des Bremsbelags an der Halterplatte 11 des Belaghalters 1 die Belagträgerplatte 2 in Umfangsrichtung der Bremsscheibe in den Nuten 15 der Umgriffstege 14 eingeschoben werden kann.

Entsprechend sind die Umgriffstege 14 und die Seitenränder 23 der Belagträgerplatte 2 vorzugsweise kreisbogenförmig geformt.

### Bezugszeichenliste

- 1: Belaghalter
- 11: Halterplatte
- 12: Belaghalterbolzen
- 13: Verriegelungselement
- 14: Umgriffsteg
- 15: Nut
- 16: Bohrung
- 17: Erhöhung

- 2: Belagträgerplatte
- 21: zentraler Bereich
- 22: Ausfräsung
- 23: Randbereich
- 24: Bohrung
- 25: sphärische Ausnehmung
- 26: sphärische Ausnehmung
- 27: Bohrung
- 28: Bohrung

- 3: Belagelement
- 31: Reibbelag
- 32: Trägerelement
- 33: Lagerelement
- 34: Schlitz
- 35: Schlitz

- 4: Trägerblech
- 5: Bremsbelag

- d₁: Plattendicke
- d₂: reduzierte Plattendicke
- d₃: Nutbreite der Umgriffstege

## Patentansprüche

1. Bremsbelaghalterung eines Bremsbelags (5) einer Scheibenbremse eines Schienenfahrzeuges an einem Belaghalter (1) der Scheibenbremse, wobei
- der Belaghalter (1) eine Halterplatte (11) und wenigstens ein Verriegelungselement (13) zur Festlegung des Belagträgers (2) an der Halterplatte (11) aufweist,
- der Bremsbelag (5) eine Belagträgerplatte (2) und wenigstens ein an dieser angeordnetes Belagelement (3) aufweist,
- die Belagträgerplatte (2) in montierter Lage des Bremsbelags (5) an dem Belaghalter (1) formschlüssig an dem Belaghalter (1) gehalten ist,
**dadurch gekennzeichnet, dass**
- an der Halterplatte (11) randseitige sich in Richtung der Belagträgerplatte (2) erstreckende, umfängliche Randbereiche (23) der Belagträgerplatte (2) umgreifende Umgriffstege (14) mit zur Flächenmitte der Halterplatte (11) offenen Nuten (15) angeformt sind.

2. Bremsbelaghalterung nach Anspruch 1, **dadurch gekennzeichnet, dass** die Randbereiche (23) der Belagträgerplatte (2) mit reduzierter Plattendicke (d₂) ausgebildet sind.

3. Bremsbelaghalterung nach Anspruch 2, **dadurch gekennzeichnet, dass** die Randbereiche (23) der Belagträgerplatte (2) mit reduzierter Plattendicke (d₂) in den Nuten (15) der Umgriffstege (14) der Halterplatte (11) aufgenommen sind.

4. Bremsbelaghalterung nach einem der vorstehenden Ansprüche, **dadurch gekennzeichnet, dass** die Umgriffstege (14) nicht über die dem wenigstens einen Belagelement (3) zugewandten Fläche der Belagträgerplatte (2) vorsteht.

5. Bremsbelaghalterung nach einem der vorstehenden Ansprüche 2 bis 4, **dadurch gekennzeichnet, dass** die Randbereiche (23) der Belagträgerplatte (2) mit reduzierter Plattendicke (d₂) als Ausfräsung ausgebildet sind.

6. Bremsbelaghalterung nach einem der vorstehenden Ansprüche, **dadurch gekennzeichnet, dass** die Umgriffstege (14) an sich in Umfangsrichtung einer Bremsscheibe der Scheibenbremse erstreckenden Seitenrändern der Halterplatte (11) ausgebildet sind.

7. Bremsbelaghalterung nach Anspruch 6, **dadurch gekennzeichnet, dass** an jedem der sich in Umfangsrichtung der Bremsscheibe der Scheibenbremse erstreckenden Seitenrändern der Halterplatte (11) wenigstens ein Umgriffsteg (14) ausgebildet ist.

8. Bremsbelaghalterung nach Anspruch 7, **dadurch gekennzeichnet, dass** an jedem der sich in Umfangsrichtung der Bremsscheibe der Scheibenbremse erstreckenden Seitenrändern der Halterplatte (11) zwei voneinander beabstandete Umgriffstege (14) ausgebildet sind.

9. Bremsbelaghalterung nach einem der vorstehenden Ansprüche, **dadurch gekennzeichnet, dass** die Nuten (15) als Rechtecknuten und die Randbereiche (23) der Belagträgerplatte (2) stufenförmig ausgebildet sind.

10. Bremsbelaghalterung nach einem der vorstehenden Ansprüche 1 bis 8, **dadurch gekennzeichnet, dass** wenigstens eine der Innenflächen der Nuten (15) abgeschrägt und entsprechend die an der abgeschrägten Innenfläche der Nuten (15) anliegenden Anlagefläche der Randbereiche (23) der Belagträgerplatte (2) abgeschrägt ausgebildet ist.

11. Bremsbelaghalterung nach einem der vorstehenden Ansprüche, **dadurch gekennzeichnet, dass** die Belagträgerplatte (2) als gewalztes Blechstück ausgebildet ist.

12. Bremsbelag (5) einer Scheibenbremse eines Schienenfahrzeuges für eine Bremsbelaghalterung nach einem der vorstehenden Ansprüche, aufweisend
- eine Belagträgerplatte (2) und
- wenigstens ein an dieser angeordnetes Belagelement (3),
**dadurch gekennzeichnet, dass**
- umfängliche Randbereiche (23) der als gewalztes Blechstück ausgebildeten Belagträgerplatte (2) mit reduzierter Plattendicke (d₂) zur Aufnahme in Nuten (15) von die umfänglichen Randbereiche (23) der Belagträgerplatte (2) umgreifenden Umgriffstegen (14) einer Halterplatte (11) eines Belaghalters (1) der Scheibenbremse ausgebildet sind.

13. Bremsbelag (5) nach Anspruch 12, **dadurch gekennzeichnet, dass** die Randbereiche (23) der Belagträgerplatte (2) mit reduzierter Plattendicke (d₂) als Ausfräsung ausgebildet sind.

14. Bremsbelag (5) nach Anspruch 12 oder 13, **dadurch gekennzeichnet, dass** die Randbereiche (23) der Belagträgerplatte (2) stufenförmig oder abgeschrägt ausgebildet sind.

15. Bremsbelag (5) nach einem der Ansprüche 12 bis 14, **dadurch gekennzeichnet, dass** an der Belagträgerplatte (2) mehrere Belagelemente (3) angeordnet sind.

16. Bremsbelag (5) nach Anspruch 15, **dadurch gekennzeichnet, dass** an der Belagträgerplatte (2) mehrere aus jeweils einem Trägerblech (4) und mehreren an diesem angeordneten Belagelementen (3) gebildete Gruppenelemente (4) angeordnet sind.

17. Bremsbelag (5) nach einem der Ansprüche 12 bis 14, **dadurch gekennzeichnet, dass** an der Belagträgerplatte (2) genau ein Belagelement (3) angeordnet ist.

18. Belaghalter (1) einer Scheibenbremse eines Schienenfahrzeuges, aufweisend
- eine Halterplatte (11) und
- wenigstens ein Verriegelungselement (13) zur Festlegung eines Belagträgers (2) der Scheibenbremse an der Halterplatte (11),
**dadurch gekennzeichnet, dass**
- an der Halterplatte (11) randseitige sich in Richtung der Belagträgerplatte (2) erstreckende Umgriffstege (14) mit zur Flächenmitte der Halterplatte (11) offenen Nuten (15) angeformt sind, in denen umfängliche Randbereiche (23) der Belagträgerplatte (2) diese umgreifend aufnehmbar sind.

19. Belaghalter (1) nach Anspruch 18, **dadurch gekennzeichnet, dass** die Umgriffstege (14) an sich in Umfangsrichtung einer Bremsscheibe der Scheibenbremse erstreckenden Seitenrändern der Halterplatte (11) ausgebildet sind.

20. Belaghalter (1) nach Anspruch 19, **dadurch gekennzeichnet, dass** an jedem der sich in Umfangsrichtung der Bremsscheibe der Scheibenbremse erstreckenden Seitenrändern der Halterplatte (11) wenigstens ein Umgriffsteg (14) ausgebildet ist.

21. Belaghalter (1) nach Anspruch 20, **dadurch gekennzeichnet, dass** an jedem der sich in Umfangsrichtung der Bremsscheibe der Scheibenbremse erstreckenden Seitenrändern der Halterplatte (11) zwei voneinander beabstandete Umgriffstege (14) ausgebildet sind.

22. Belaghalter (1) nach einem der vorstehenden Ansprüche 18 bis 21, **dadurch gekennzeichnet, dass** die Nuten (15) als Rechtecknuten oder wenigstens eine der Innenflächen der Nuten (15) abgeschrägt ausgebildet sind.

## Claims

1. A brake pad mounting of a brake pad (5) of a disk brake of a rail vehicle on a pad holder (1) of the disk brake,
- the pad holder (1) having a holder plate (11) and at least one locking element (13) for securing the pad carrier (2) to the holder plate (11),
- the brake pad (5) having a pad carrier plate (2) and at least one pad element (3) arranged on the pad carrier plate (2),
- the pad carrier plate (2) being held on the pad holder (1) in a form-fit when the brake pad (5) is mounted on the pad holder (1),
**characterised in that**
- peripheral engaging bars (14), which extend in the direction of the pad carrier plate (2), encompass peripheral edge regions (23) of the pad carrier plate (2) and have grooves (15) that are open towards the centre of the holder plate (11), are integrally formed on the holder plate (11).

2. A brake pad mounting according to claim 1, **characterised in that** edge regions (23) of the pad carrier plate (2) are designed with a reduced plate thickness (d₂).

3. A brake pad mounting according to claim 2, **characterised in that** the edge regions (23) of the pad carrier plate (2) with the reduced plate thickness (d₂) are received in the grooves (15) in the engaging bars (14) of the holder plate (11).

4. A brake pad mounting according to any of the preceding claims, **characterised in that** the engaging bars (14) do not project beyond the face of the pad carrier plate (2) facing the at least one pad element (3).

5. A brake pad mounting according to any of the preceding claims 2 to 4, **characterised in that** the edge regions (23) of the pad carrier plate (2) with the reduced the plate thickness (d₂) take the form of milled grooves.

6. A brake pad mounting according to any of the preceding claims, **characterised in that** the engaging bars (14) are formed on lateral rims of the holder plate (11) that extend in the circumferential direction of a brake disk of the disk brake.

7. A brake pad mounting according to claim 6, **characterised in that** at least one engaging bar (14) is formed at each of the lateral rims of the holder plate (11) that extend in the circumferential direction of the brake disk of the disk brake.

8. A brake pad mounting according to claim 7, **characterised in that** two engaging bars (14) spaced a certain distance apart are formed at each of the lateral rims of the holder plate (11) that extend in the circumferential direction of the brake disk of the disk brake.

9. A brake pad mounting according to any of the preceding claims, **characterised in that** the grooves (15) take the form of rectangular grooves and the edge regions (23) of the pad carrier plate (2) are stepped.

10. A brake pad mounting according to any of the preceding claims 1 to 8, **characterised in that** at least one of the inner faces of the grooves (15) is chamfered in design and that, accordingly, the bearing surface of the edge regions (23) of the pad carrier plate (2) that bears against the chamfered inner face of the grooves (15) is also chamfered in design.

11. A brake pad mounting according to any of the preceding claims, **characterised in that** the pad carrier plate (2) takes the form of a piece of rolled sheet metal.

12. A brake pad (5) of a disk brake of a rail vehicle for a brake pad mounting according to any of the preceding claims, having
- a pad carrier plate (2) and
- at least one pad element (3) arranged on the pad carrier plate (2),
**characterised in that**
- peripheral edge regions (23) of the pad carrier plate (2), which has a reduced plate thickness (d₂) and takes the form of a piece of rolled sheet metal, are designed to receive in grooves (15) the peripheral engaging bars (14) of a holder plate (11) of a pad holder (1) of the disk brake that encompass the pad carrier plate (2).

13. A brake pad (5) according to claim 12, **characterised in that** the edge regions (23) of the pad carrier plate (2) with the reduced plate thickness (d₂) take the form of milled grooves.

14. A brake pad (5) according to claim 12 or 13, **characterised in that** the edge regions (23) of the pad carrier plate (2) are stepped or chamfered in design.

15. A brake pad (5) according to one of claims 12 to 14, **characterised in that** a plurality of pad elements (3) are arranged on the pad carrier plate (2).

16. A brake pad (5) according to claim 15, **characterised in that** a plurality of group elements (4) each comprising a carrier sheet (4) and a plurality of pad elements (3) arranged on this carrier sheet (4) are arranged on the pad carrier plate (2).

17. A brake pad (5) according to one of claims 12 to 14, **characterised in that** exactly one pad element (3) is arranged on the pad carrier plate (2).

18. A pad holder (1) of a disk brake of a rail vehicle, having
- a holder plate (11) and
- at least one locking element (13) for securing a pad carrier (2) of the disk brake to the holder plate (11),
**characterised in that**
- peripheral engaging bars (14), which extend in the direction of the pad carrier plate (2) and have grooves (15) that are open towards the centre of the holder plate (11), are integrally formed on the holder plate (11), peripheral edge regions (23) of the pad carrier plate (2) being received in and encompassed by the grooves (15).

19. A pad holder (1) according to claim 18, **characterised in that** the engaging bars (14) are formed on lateral rims of the holder plate (11) that extend in the circumferential direction of a brake disk of the disk brake.

20. A pad holder (1) according to claim 19, **characterised in that** at least one engaging bar (14) is formed on each of the lateral rims of the holder plate (11) that extend in the circumferential direction of the brake disk of the disk brake.

21. A pad holder (1) according to claim 20, **characterised in that** two engaging bars (14) spaced a certain distance apart are formed on each of the lateral rims of the holder plate (11) that extend in the circumferential direction of the brake disk of the disk brake.

22. A pad holder (1) according to any of the preceding claims 18 to 21, **characterised in that** the grooves (15) take the form of rectangular grooves or that at least one of the inner faces of the grooves (15) is chamfered in design.

## Revendications

1. Fixation d'une garniture (5) d'un frein à disque d'un véhicule ferroviaire à un support (1) de la garniture du frein à disque, dans laquelle
- le support (1) de la garniture a une plaque (11) et au moins un élément (13) de verrouillage pour fixer le support (2) de la garniture à la plaque (11) du support,
- la garniture (5) de frein a une plaque (2) de support de garniture et au moins un élément (3) de garniture, qui y est monté,
- la plaque (2) du support de la garniture est, lorsque la garniture (5) de frein est en position montée sur le support (1) de la garniture, maintenue à complémentarité de forme sur le support (1) de la garniture,
**caractérisée en ce que**
- des réglettes (14) de serrage, ayant des rainures (15) ouvertes vers le milieu de surface de la plaque (11) du support, s'étendant dans la direction de la plaque (2) du support de garniture et enserrant des parties (23) de bord de pourtour de la plaque (2) du support de la garniture, sont formées sur la plaque (11) du support.

2. Fixation d'une garniture de frein suivant la revendication 1, **caractérisée en ce que** les parties (23) de bord de la plaque (2) du support de la garniture ont une épaisseur (d₂) de plaque réduite.

3. Fixation d'une garniture de frein suivant la revendication 2, **caractérisée en ce que** les parties (23) de bord de la plaque (2) de support de la garniture, d'épaisseur (d₂) de plaque réduite, sont reçues dans les rainures (15) des réglettes (14) de serrage de la plaque (11) de support.

4. Fixation d'une garniture de frein suivant l'une des revendications précédentes, **caractérisée en ce que** les réglettes (14) de serrage ne dépassent pas de la surface, tournée vers le au moins un élément (3) de garniture, de la plaque (2) de support de la garniture.

5. Fixation d'une garniture de frein suivant l'une des revendications 2 à 4 précédentes, **caractérisée en ce que** les parties (23) de bord de la plaque (2) du support de la garniture, d'épaisseur (d₂) de plaque réduite, sont constituées sous la forme d'un fraisage.

6. Fixation d'une garniture de frein suivant l'une des revendications précédentes, **caractérisée en ce que** les réglettes (14) de serrage sont constituées sur des bords latéraux, s'étendant dans la direction périphérique d'un disque du frein à disque, de la plaque (11) du support.

7. Fixation d'une garniture de frein suivant la revendication 6, **caractérisée en ce qu'**au moins une réglette (14) de serrage est constituée sur chacun des bords latéraux, s'étendant dans la direction périphérique du disque du frein à disque, de la plaque (11) du support.

8. Fixation d'une garniture de frein suivant la revendication 7, **caractérisée en ce que** deux réglettes (14) de serrage, à distance l'une de l'autre, sont constituées sur chacun des bords latéraux, s'étendant dans la direction périphérique du disque du frein à disque, de la plaque (11) de support.

9. Fixation d'une garniture de frein suivant l'une des revendications précédentes, **caractérisée en ce que** les rainures (15) sont constituées sous la forme de rainures rectangulaires et les parties (23) de bord de la plaque (2) du support de la garniture, en forme de palier.

10. Fixation d'une garniture de frein suivant l'une des revendications 1 à 8 précédentes, **caractérisée en ce qu'**au moins l'une des surfaces intérieures des rainures est biseautée et, de manière correspondante, la surface d'application, s'appliquant à la surface intérieure biseautée des rainures (15), des parties (23) de bord de la plaque (2) du support de la garniture, est biseautée.

11. Fixation d'une garniture de frein suivant l'une des revendications précédentes, **caractérisée en ce que** la plaque (2) du support de la garniture est constituée sous la forme d'une pièce de tôle laminée.

12. Garniture (5) d'un frein à disque d'un véhicule ferroviaire pour une fixation de garniture de frein suivant l'une des revendications précédentes, comportant
- une plaque (2) de support de la garniture et
- au moins un élément (3) de garniture monté sur celle-ci,
**caractérisée en ce que**
- des parties (23) périphériques de bord de la plaque (2) du support de la garniture, constituée sous la forme d'une pièce de tôle laminée, sont constituées en ayant une épaisseur (d₂) de plaque réduite pour la réception dans des rainures (15) de réglettes (14) de serrage, enserrant les parties (23) périphériques de bord de la plaque (2) du support de la garniture, d'une plaque (11) d'un support (1) de garniture du frein à disque.

13. Garniture (5) de frein suivant la revendication 12, **caractérisée en ce que** les parties (23) de bord de la plaque (2) du support de la garniture, d'épaisseur (d₂) de plaque réduite, sont constituées sous la forme d'un fraisage.

14. Garniture (5) de frein suivant la revendication 12 ou 13, **caractérisée en ce que** les parties (23) de bord de la plaque (2) du support de la garniture sont constituées en forme de palier ou en étant biseautées.

15. Garniture (5) de frein suivant l'une des revendications 12 à 14, **caractérisée en ce que** plusieurs éléments (3) de garniture sont montés sur la plaque (2) du support de la garniture.

16. Garniture (5) de frein suivant la revendication 15, **caractérisée en ce que**, sur la plaque (2) du support de la garniture, sont montés plusieurs éléments (4) de groupe, formés chacun d'une tôle (4) de support et de plusieurs éléments (3) de garniture, montés sur celle-ci.

17. Garniture (5) de frein suivant l'une des revendications 12 à 14, **caractérisée en ce qu'**exactement un élément (3) de garniture est monté sur la plaque (2) de support de la garniture.

18. Support (1) de garniture d'un frein à disque d'un véhicule ferroviaire, comportant
- une plaque (11) de support et
- au moins un élément (13) de verrouillage pour fixer un support (2) de garniture du frein à disque à la plaque (11) de support,
**caractérisé en ce que**
- sur la plaque (1) du support sont formés des réglettes (14) de serrage, s'étendant du côté du bord en direction de la plaque (2) du support de la garniture et ayant des rainures (15) ouvertes vers le milieu de surface de la plaque (11) du support, rainures dans lesquelles des parties (23) de bord du pourtour de la plaque (2) du support de la garniture peuvent être reçues en les enserrant.

19. Support (1) de garniture suivant la revendication 18, **caractérisé en ce que** les réglettes (14) de serrage sont constituées sur des bords latéraux, s'étendant dans la direction périphérique d'un disque du frein à disque, de la plaque (11) du support.

20. Support (1) de garniture suivant la revendication 19, **caractérisé en ce qu'**au moins une réglette (14) de serrage est constituée sur chacun des bords latéraux, s'étendant dans la direction périphérique du disque du frein à disque, de la plaque (11) du support.

21. Support (1) de garniture suivant la revendication 20, **caractérisé en ce que** deux réglettes (14) de serrage, à distance l'une de l'autre, sont constituées sur chacun des bords latéraux, s'étendant dans la direction périphérique du disque du frein à disque, de la plaque (11) de support.

22. Support (1) de garniture suivant l'une des revendications 18 à 21 précédentes, **caractérisé en ce que** les rainures (15) sont constituées sous la forme de rainures rectangulaires et les parties (23) de bord de la plaque (2) du support de la garniture, en forme de palier.
